# FASCICULE DE BREVET EUROPEEN

(11) **EP 0 463 896 B1**
(45) Date de publication et mention de la délivrance du brevet: **03.08.1994**
(21) Numéro de dépôt: 91401360.2
(22) Date de dépôt: 28.05.1991
(51) Int. Cl.: B60T 13/563, B60T 13/569

(54) **Servofrein pneumatique de type tandem**
Tandem-Druckluft-Servobremse
Tandem pneumatic servo brake

(30) Priorité: 29.06.1990 FR 9008220
(43) Date de publication de la demande: 02.01.1992
(73) Titulaire: ALLIEDSIGNAL EUROPE SERVICES TECHNIQUES, 93700 Drancy (FR)
(72) Inventeur: Castel, Philippe, F-93700 Drancy (FR); Pressaco, Pierre, F-93700 Drancy (FR)
(74) Mandataire: Bentz, Jean-Paul

(56) Documents cités:
- DE-A- 1 576 060
- DE-A- 2 436 144
- DE-A- 3 715 839
- FR-A- 2 431 623
- US-A- 4 495 854

## Description

La présente invention concerne les servofreins pneumatiques de type tandem pour l'assistance au freinage des véhicules automobiles.

Les servofreins pneumatiques de type tandem sont bien connus de l'Homme du Métier puisqu'ils permettent, de manière générale, d'augmenter la force d'assistance au freinage sans augmenter sensiblement le diamètre extérieur du servofrein.

Par exemple, le document US-A-4 494 445 décrit un tel servofrein conforme au préambule de la première revendication, et comprenant un moyeu mobile entraînant une tige de poussée par l'intermédiaire d'un disque de réaction, une enceinte fermée composée d'une coquille avant côté maître-cylindre et d'une coquille arrière côté pédale d'actionnement, présentant toutes deux un fond et une virole cylindrique déterminant une chambre avant et une chambre arrière séparées par un élément de séparation présentant une cloison annulaire, un piston avant et un piston arrière disposés coaxialement respectivement dans les chambres avant et arrière qui sont elles-même respectivement divisées par une membrane étanche solidaire de chacun des pistons pour déterminer, à l'intérieur de chacune d'elles, une sous-chambre à pression constante et une sous-chambre à pression variable, les pistons étant mobiles en direction axiale sous l'effet des différences des pressions régnant entre les sous-chambres de chaque chambre.

Un tel servomoteur présente un inconvénient important en ce que, lorsque l'air est admis dans la sous-chambre à pression variable de la chambre avant, la différence entre la pression régnant dans cette sous-chambre et la pression régnant dans la sous-chambre à pression constante de la chambre arrière, qui lui est adjacente, tend à arracher l'élément de séparation. Ce dernier doit alors être fermement fixé à la coquille avant, ce qui complique nécessairement la fabrication d'un tel servomoteur tout en augmentant le coût et en diminuant la fiabilité.

En outre, le piston avant étant en aval du disque de réaction et fixé à la tige de poussée, il ne participe pas à la réaction que doit ressentir le conducteur en fonction de l'assistance.

Enfin, le ressort de rappel est logé dans l'une des sous-chambres et est, par conséquent, de longueur réduite. Sa raideur doit alors être très élevée. Du fait de l'importante dispersion des caractéristiques des ressorts à raideur élevée, il est difficile d'obtenir en série des servomoteurs présentant des caractéristiques identiques.

On connait, de FR-A-2 431 623, un servofrein pneumatique de type tandem dans lequel la cloison annulaire de l'élément de séparation est verrouillée dans une zone périphérique faisant saillie de la partie en forme de virole cylindrique de l'une des coquilles. De ce fait, le servomoteur présente un volume important et, en outre, en cas de défaillance pneumatique, le joint d'étanchéité entre l'élément de séparation et l'extrémité arrière du piston avant détermine une résistance que le conducteur doit vaincre.

La présente invention a pour but d'obvier à l'ensemble de ces inconvénients.

Selon l'invention, la cloison annulaire de l'élément de séparation est simplement posée et prend appui sur le fond de la coquille arrière de l'enceinte, et les deux pistons sont solidaires l'un de l'autre et du moyeu mobile.

De préférence, un orifice pratiqué dans l'extrémité arrière du piston avant met en communication les sous-chambres à pression constante, tandis qu'une communication est ménagée entre les sous-chambres à pression variable au niveau du point d'appui de la cloison annulaire de l'élément de séparation sur la coquille arrière.

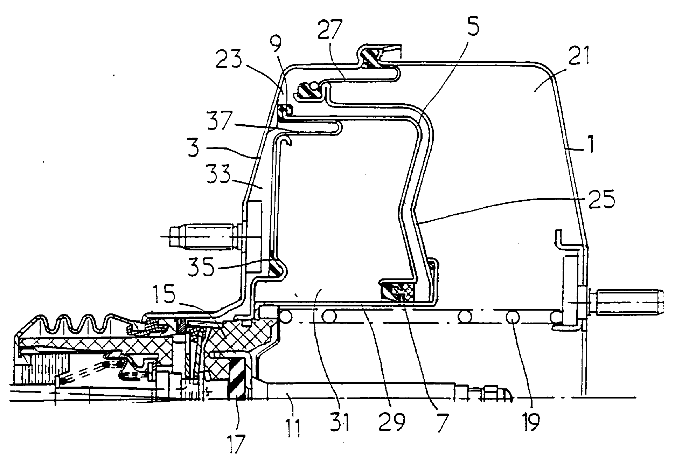

L'invention sera mieux comprise et d'autres buts, avantages et caractéristiques apparaîtront plus clairement à la lecture de la description qui suit d'un mode de réalisation préféré donné à titre non-limitatif et à laquelle une planche de dessin est jointe sur laquelle :
- La Figure unique représente schématiquement en coupe partielle un servomoteur conforme à la présente invention.

En référence maintenant à cette Figure unique, le servomoteur est constitué d'une coquille avant 1 côté maître-cylindre (non représenté) et d'une coquille arrière 3 côté pédale d'actionnement (non représentée) déterminant une enceinte fermée.

Comme l'homme du métier l'aura compris, on désigne par "avant" la direction vers laquelle se meuvent les composants mobiles lors de l'actionnement du servomoteur, et par "arrière" la direction vers laquelle se meuvent les mêmes composants quand ils retournent en position de repos. En d'autres mots l'avant est à droite sur la Figure, côté maître-cylindre, l'arrière est à gauche sur la Figure, côté pédale d'actionnement.

Un élément de séparation 5 est disposé à l'intérieur de l'enceinte pour déterminer une chambre avant et une chambre arrière.

La chambre avant est elle-même divisée en deux sous-chambres 21, 23 séparées par un piston 25 et une membrane étanche 27. De même la chambre arrière est divisée en deux sous-chambres 31, 33 séparées par un piston 35 et une membrane étanche 37.

Les deux pistons 25 et 35 sont solidaires l'un de l'autre et d'un moyeu mobile 15 qui entraîne une tige de poussée 11 par l'intermédiaire d'un disque de réaction 17, ce moyeu 15 étant rappelé au repos au moyen d'un ressort hélicoïdal 19 s'appuyant sur la coquille avant 1.

L'extrémité arrière 29 du piston avant 25 affecte la forme d'un cylindre creux venant se fixer au moyeu 15, le ressort 19 pénétrant dans ce cylindre creux de manière à présenter la plus grande longueur possible. Un joint d'étanchéité 7 est disposé entre l'élément de séparation 5 et cette extrémité arrière 29 du piston 25 pour assurer l'étanchéité de la sous-chambre 23 à pression variable située entre deux sous-chambres 21, 31 à pression constante. Cette extrémité arrière 29 du piston 25 traverse bien évidemment la sous-chambre 31 à pression constante.

Au moins un orifice est pratiqué dans l'extrémité arrière 29 pour assurer une communication entre les deux sous-chambres 21, 31 à pression constante.

L'élément de séparation 5 comporte une cloison annulaire 9 qui est simplement posée et vient en appui sur la coquille arrière 3. De préférence, dans l'exemple représenté, une communication est ménagée entre les deux sous-chambres 23, 33 à pression variable au niveau du point d'appui de la cloison annulaire 9 sur la coquille arrière 3.

Ainsi, lorsque les deux sous-chambres à pression constante 21, 31 communiquent avec une source de dépression (non représentée), par exemple une pompe à vide, et que de l'air est admis dans les sous-chambres à pression variable 23, 33, les pistons 25 et 35 sont entraînés vers l'avant sous l'effet des différences de pressions dans les sous-chambres. Toutefois, ces différences de pressions tendent alors à renforcer l'appui de la cloison annulaire 9 de l'élément de séparation 5 sur la coquille arrière 3. On obtient donc ainsi un servomoteur du type tandem dans lequel les composants internes n'ont pas tendance à être arrachés les uns des autres. La fabrication d'un tel servomoteur est alors grandement simplifiée car il n'est plus nécessaire de prévoir un moyen de fixation de l'élément de séparation 5 à l'une des coquilles externes.

En outre, les deux pistons participent dûment à la réaction, et le ressort de rappel n'a pas besoin de présenter une raideur élevée, source d'une importante dispersion.

Enfin, en cas de défaillance pneumatique, l'élément de séparation suit le piston et ne s'oppose nullement au mouvement.

Bien évidemment, l'homme du métier pourra apporter de nombreuses modifications sans sortir du cadre de la présente invention tel que défini par les revendications jointes.

En effet, la pression dite constante ci-avant n'est pas forcément constante. Elle doit cependant rester inférieure (au travail) ou égale (au repos) à la pression dite variable ci-avant.

## Revendications

1. Servofrein pneumatique de type tandem pour l'assistance au freinage des véhicules automobiles comprenant un moyeu mobile (15) entraînant une tige de poussée (11) par l'intermédiaire d'un disque de réaction (17), une enceinte fermée composée d'une coquille avant (1) côté maître-cylindre et d'une coquille arrière (3) côté pédale d'actionnement, présentant toutes deux un fond et une virole cylindrique, et déterminant une chambre avant et une chambre arrière séparées par un élément de séparation (5) présentant une cloison annulaire (9), un piston avant (25) et un piston arrière (35) disposés coaxialement respectivement dans les chambres avant et arrière qui sont elles-même respectivement divisées par une membrane étanche (27, 37) solidaire de chacun des dits pistons (25, 35) pour déterminer, à l'intérieur de chacune d'elles, une sous-chambre à pression constante (21, 31) et une sous-chambre à pression variable (23, 33), les dits pistons (25, 35) étant mobiles en direction axiale sous l'effet des différences des pressions régnant entre les dites sous-chambres de chaque chambre, le dit servomoteur étant caractérisé en ce que la dite cloison annulaire (9) du dit élément de séparation (5) est simplement posée et prend appui sur le fond de la coquille arrière (3) de la dite enceinte, et que les dits pistons (25, 35) sont solidaires l'un de l'autre et du dit moyeu mobile (15).

2. Servofrein selon la revendication 1, caractérisé en ce que l'extrémité arrière (29) du dit piston avant (25) affecte la forme d'un cylindre creux traversant à coulissement de façon étanche la dite sous-chambre arrière à pression constante (31).

3. Servofrein selon la revendication 2, caractérisé en ce qu'un ressort de rappel au repos (19) disposé entre la dite coquille avant (1) et le moyeu (15) pénètre dans la dite extrémité arrière (29) du piston avant (25).

4. Servofrein selon la revendication 2 ou 3, caractérisé en ce qu'un joint d'étanchéité (7) est disposé entre le dit élément de séparation (5) et la dite extrémité arrière (29) du dit piston avant (25).

5. Servofrein selon la revendication 4, caractérisé en ce qu'au moins un orifice pratiqué dans la dite extrémité arrière (29) du dit piston avant (25) met en communication les dites sous-chambres à pression constante (21, 31).

6. Servofrein selon l'une quelconque des revendications précédentes, caractérisé en ce qu'une communication est ménagée entre les dites sous-chambres à pression variable (23, 33) au niveau du point d'appui de la cloison annulaire (9) du dit élément de séparation (5) sur la dite coquille arrière (3).

## Patentansprüche

1. Pneumatische Tandem-Servobremse zur Bremsunterstützung bei Kraftfahrzeugen, mit einer beweglichen Nabe (15), die über eine Reaktionsscheibe (17) eine Schubstange (11) antreibt, einem geschlossenen Gehäuse, das aus einer hauptzylinderseitigen vorderen Schale (1) und einer betätigungspedalseitigen hinteren Schale (3) besteht, die beide jeweils einen Boden und einen zylindrischen Mantel besitzen und eine vordere Kammer und eine hintere Kammer abgrenzen, die durch ein Trennelement (5) getrennt sind, das eine ringförmige Zwischenwand (9) sowie einen vorderen Kolben (25) und einen hinteren Kolben (35) aufweist, die koaxial in der vorderen bzw. in der hinteren Kammer angeordnet sind, die wiederum jeweils von einer dichten Membran (27, 37) unterteilt sind, die an jeweils einem der Kolben (25, 35) befestigt ist, um im Inneren jeder Kammer eine Teilkammer (21, 31) mit konstantem Druck und eine Teilkammer (23, 33) mit variablem Druck abzugrenzen, wobei die Kolben (25, 35) in axialer Richtung unter der Wirkung der Unterschiede der in den Teilkammern jeder Kammer herrschenden Drücke beweglich ist, wobei der Servomotor dadurch gekennzeichnet ist, daß die ringförmige Zwischenwand (9) des Trennelementes (5) einfach auf dem Boden der hinteren Schale (3) des Gehäuses angeordnet ist und sich an diesem Boden in Anlage befindet und daß die Kolben (25, 35) fest miteinander und mit der beweglichen Nabe (15) verbunden sind.

2. Servobremse nach Anspruch 1, dadurch gekennzeichnet, daß das hintere Ende (29) des vorderen Kolbens (25) die Form eines hohlen Zylinders besitzt, der dicht gleitend die hintere Teilkammer (31) mit konstantem Druck durchquert.

3. Servobremse nach Anspruch 2, dadurch gekennzeichnet, daß eine zwischen der vorderen Schale (1) und der Nabe (15) angeordnete Ruhestellungs-Rückstellfeder (19) in das hintere Ende (29) des vorderen Kolbens (25) eindringt.

4. Servobremse nach Anspruch 2 oder 3, dadurch gekennzeichnet, daß zwischen dem Trennelement (5) und dem hinteren Ende (29) des vorderen Kolbens (25) eine Dichtung (7) angeordnet ist.

5. Servobremse nach Anspruch 4, dadurch gekennzeichnet, daß in dem hinteren Ende (29) des vorderen Kolbens (25) wenigstens eine Öffnung ausgebildet ist, die die Teilkammern (21, 31) mit konstantem Druck miteinander verbindet.

6. Servobremse nach einem der vorhergehenden Ansprüche, dadurch gekennzeichnet, daß zwischen den Teilkammern (23, 33) mit variablem Druck in Höhe der Anlagestelle der ringförmigen Zwischenwand (9) des Trennelementes (5) an der hinteren Schale (3) eine Verbindung ausgebildet ist.

## Claims

1. Pneumatic brake booster of the tandem type for the brake boosting of motor vehicles, comprising a movable hub (15) driving a push rod (11) by means of a reaction disk (17), a closed containment composed of a front shell (1) on the same side as the master cylinder and of a rear shell (3) on the same side as the actuating pedal, which both have a bottom and a cylindrical ring and which define a front chamber and a rear chamber separated by a separating element (5) having an annular partition (9), and a front piston (25) and a rear piston (35), respectively arranged coaxially in the front and rear chambers which are themselves respectively divided by a sealing diaphragm (27, 37) fixed to each of said pistons (25, 35), in order to define, within each of these, a sub-chamber of constant pressure (21, 31) and a sub-chamber of variable pressure (23, 33), said pistons (25, 35) being movable in the axial direction under the effect of the differences in the pressures prevailing between said sub-chambers of each chamber, said booster being characterized in that said annular partition (9) of said separating element (5) is simply put in place and bears on the bottom of the rear shell (3) of said containment, and in that said pistons (25, 35) are fixed to one another and to said movable hub (15).

2. Brake booster according to Claim 1, characterized in that the rear end (29) of said front piston (25) assumes the form of a hollow cylinder passing sealingly slidably through said rear sub-chamber of constant pressure (31).

3. Brake booster according to Claim 2, characterized in that a spring for return to rest (19) arranged between said front shell (1) and the hub (15) penetrates into said rear end (29) of the front piston (25).

4. Brake booster according to Claim 2 or 3, characterized in that a gasket (7) is arranged between said separating element (5) and said rear end (29) of said front piston (25).

5. Brake booster according to Claim 4, characterized in that at least one orifice made in said rear end (29) of said front piston (25) puts said sub-chambers of constant pressure (21, 31) in communication.

6. Brake booster according to any one of the preceding claims, characterized in that communication is made between said sub-chambers of variable pressure (23, 33) in the region of the bearing point of the annular partition (9) of said separating element (5) on said rear shell (3).
